# EUROPÄISCHE PATENTSCHRIFT

(11) **EP 1 960 850 B1**
(45) Veröffentlichungstag und Bekanntmachung des Hinweises auf die Patenterteilung: **29.08.2018**
(21) Anmeldenummer: 06830422.9
(22) Anmeldetag: 06.12.2006
(51) Int. Cl.: G05B 13/02, H01F 27/12, G05D 23/19

(54) **STEUERUNGSVERFAHREN ZUR KÜHLUNG EINER TECHNISCHEN ANLAGE**
CONTROL METHOD FOR COOLING AN INDUSTRIAL PLANT
PROCEDE DE COMMANDE DU REFROIDISSEMENT D'UNE INSTALLATION INDUSTRIELLE

(30) Priorität: 13.12.2005 DE 102005060635
(43) Veröffentlichungstag der Anmeldung: 27.08.2008
(73) Patentinhaber: Siemens Aktiengesellschaft, 80333 München (DE)
(72) Erfinder: BRETZNER, Thomas, 90530 Wendelstein (DE); ECKERT, Günter, 90596 Schwanstetten (DE); REBLING, Walter, 90475 Nürnberg (DE); THEURER, Helmut, 90469 Nürnberg (DE)
(86) Internationale Anmeldenummer: PCT/EP2006/069383
(87) Internationale Veröffentlichungsnummer: WO 2007/068639

(56) Entgegenhaltungen:
- US-A1- 5 710 533
- US-A1- 5 838 881
- US-A1- 2003 062 149
- US-A1- 2004 218 355
- PALMER J A ET AL: "Intelligent control of large power transformer cooling pumps" IEE PROCEEDINGS: GENERATION, TRANSMISSION AND DISTRIBUTION, INSTITUTION OF ELECTRICAL ENGINEERS, GB, Bd. 143, Nr. 5, 13. September 1996 (1996-09-13), Seiten 474-478, XP006006490 ISSN: 1350-2360

## Beschreibung

Die Erfindung betrifft ein Verfahren zur Steuerung der Kühlung einer technischen Anlage mit mindestens einer elektrischen Komponente und mit einem Kühlsystem mit mindestens einem Kühlelement zur Kühlung der elektrischen Komponente, wobei mindestens ein Sensor die Temperatur und/oder Viskosität des im Kühlsystem befindlichen Kühlmediums misst.

Die Kühlung einer elektrischen Komponente, insbesondere eines Öltransformators, ist aufgrund der im Betrieb der elektrischen Komponente entstehenden Wärmeenergie notwendig. Herkömmlicherweise, wird bei einem ölgekühlten Transformator, ein zwischen den Wicklungen verlaufendes Kühlkreislaufsystem benutzt, in dem ein Kühlmedium, wie z.B. ein Kühlöl, zirkuliert. Durch die Erwärmung des Kühlöls entstehen Wärmeschichtungen innerhalb der Kühlkreisläufe, so dass es zu einer Zirkulation des Kühlöles innerhalb des Kühlsystems kommt. Gleichzeitig ist häufig das Kühlsystem mit einem Wärmetauscher verbunden, der die Wärme des Kühlöles als Kühlmedium an die Umgebungsluft abgibt. Dieser Wärmeaustausch wird häufig durch zusätzliche Radiatoren unterstützt, indem die mit der im Kontakt mit der Wärmeaustauscheinheit befindliche Luftmenge erhöht wird. Durch koordinierte Steuerung von zusätzlichen Ölpumpen innerhalb des Kühlmediums und der Radiatorenleistung kann eine effektive Kühlung eines Öltransformators bereitgestellt werden.

Herkömmlicherweise erfolgt die Steuerung dieses Kühlsystems bestehend aus dem Kühlkreislauf für das Öl, der Wärmetauscheinheit und den Radiatoren in einer sehr einfachen Art und Weise. Bei Überschreiten einer bestimmten Temperaturstufe innerhalb des Kühlsystems werden die Ölpumpen und/oder die Ventilatoren zugestaltet, wobei die Ventilatoren und/oder die Pumpen nur maximal drei Leistungsstufen besitzen. Die Zuschaltung dieser Aggregate erfolgt bei Überschreitung von bestimmten fest vorgegebenen Werten. Nachteilig hierbei ist jedoch, dass diese Kühlaggregate nur innerhalb großer Temperaturabstände zu- beziehungsweise abgeschaltet werden. Dies führt jedoch zu erheblichen Volumenänderungen des Ölstandes innerhalb des Kühlsystems und der daran angeschlossenen Ausdehnungsgefäße. Bei großen Volumenschwankungen innerhalb des Ausdehnungsgefäßes kommt es zu einer so genannten "Atmung" des Transformators, wodurch vermehrt Feuchtigkeit aufgrund des Kontaktes mit der Umgebungsluft in das Kühlmedium gelangt. Dies führt zu einer beschleunigten Alterung des Kühlflüssigkeitsmediums und beeinträchtigt zusätzlich die Isolationsfähigkeit des Kühlöles als Kühlmedium.

Herkömmlicherweise wird die Temperatur innerhalb des Kühlsystems beziehungsweise der im Transformator herrschenden Temperatur indirekt gemessen beziehungsweise ermittelt. Dabei ist zum einen ein Temperatursprung zwischen der Wicklung und dem umgebenden Kühlsystem zu berücksichtigen, der von dem Strom innerhalb der Wicklung abhängt. Daher wird der Wandlersekundärstrom zur Bestimmung der Wicklungstemperatur genutzt. Der Wandlersekundärstrom speist dann wiederum einen Heizwiderstand in einem Zeigerthermometer und bewirkt dadurch eine der Transformatorbelastung entsprechenden Temperaturanzeige, die der tatsächlich gemessenen Öltemperatur im Idealfalle entspricht. Aufgrund dieser indirekten Messmethode lässt sich die mittlere beziehungsweise maximale Wicklungstemperatur abbilden. Die Einstellungen des Halbstromes erfolgt dabei jedoch nach vorher festgelegten Kennlinien. Des Weiteren erfolgt die Berechnung des Temperatursprunges zwischen der Wicklung und dem umgebenden Kühlmedium auf der Grundlage des so genannten Transformatornennbetriebzustandes. Bei anderen Betriebszuständen des Transformators als dem Nennbetriebszustand ist keine zweifelsfreie Ermittlung der Heißpunkttemperatur möglich, da zum einen das dem Nennbetriebszustand - und damit der Berechnung der Heißtemperatur - zugrunde liegende physikalische Berechnungsmodell nicht vollständig auf andere Betriebszustände des Transformators anwendbar ist. Weiterhin werden aktuelle Zustandsparameter des Kühlsystems, z. B. wie viel Pumpen und Ventilatoren derzeit im Betrieb sind, nicht abgefragt und daher die momentane Kühlleistung bei der Ermittlung der derzeitigen tatsächlichen Wicklungstemperatur nicht berücksichtigt.

Die US 5,710,533 offenbart einen elektrischen Transformator mit reduzierten Lüftergeräuschen.

Des Weiteren offenbart die US 2003/0062149 ein elektroosmotisches Mikrokanalkühlungssystem für elektrische Geräte.

Aufgabe der vorliegenden Erfindung ist es, die oben erwähnten Nachteile zu vermeiden und einer technischen Anlage während des Betriebes eine optimale Kühlleistung jederzeit bereitzustellen.

Erfindungsgemäß wird die Aufgabe durch die Merkmale des Anspruchs 1 gelöst. Es ist dabei vorgesehen, dass regelbasierte Anwendungen und/oder ein neuronales Netz mittels eines Steuerungsprofils zur Steuerung des Kühlelementes dient und bezüglich eines vorgegebenen Betriebszustandes der elektrischen Komponente optimiert ist.

Das Steuerungsprofil wird von dem Bediener vorgegeben und ist bezüglich eines vorgebbaren Betriebszustandes der elektrischen Komponente optimiert. So kann z.B. das Steuerungsprofil dergestalt konzipiert sein, dass möglichst wenig Geräuschbelastung entsteht und somit auf einen Einsatz von Lüftern bei einer Abweichung zwischen SOLL- und IST-Temperatur nahezu verzichtet wird. Das Steuerungsprofil kann ebenfalls auf eine lange Betriebszeit der elektrischen Komponente ausgerichtet sein, in dem eine bestimmte Temperatur innerhalb der elektrischen Komponente nicht überschritten werden darf.

In einer vorteilhaften Ausgestaltung des Verfahrens ist vorgesehen, dass die Berechnung der Temperaturverteilung innerhalb der elektrischen Komponente auf der Grundlage der gemessenen Temperatur und gegebenenfalls zusätzlich der Viskosität und/oder Durchflussmenge des Kühlmediums und/oder bei der Entwicklung der elektrischen Komponente zugrunde gelegte Betriebsdaten erfolgt.

Durch das erfindungsgemäße Verfahren ist gewährleistet, dass die Steuerung der Kühlelemente auf jeden einzelnen Transformator optimiert und unter Berücksichtigung der zur Verfügung stehenden Kühlelemente, der verfügbaren Kühlleistung, des aktuellen Betriebszustandes sowie auf die jeweilige Lebensdauer des Transformators speziell abgestimmt ist. Das vom Betreiber zu wählende Steuerungsprofil dient als Grundlage der Steuerung für das Kühlsystem und damit für einen optimalen Betrieb des Transformators im Hinblick auf das gewählte Steuerungsprofil, wie z.B. die Steuerung des Transformators im Hinblick auf eine maximale Betriebslaufzeit.

Darüber hinaus werden Daten und Konstruktionswerte der Planung und Entwicklung des Transformators bei der Erstellung der jeweiligen Steuerungsprofile sowie in die Berechnung der Heißpunkttemperatur berücksichtigt. Weiterhin können bereits im Transformatorprüffeld festgestellte Abweichungen zwischen Berechnung und realem Betrieb in die spezifischen Steuerungsprofile der Transformatoren implementiert werden.

Es ergeben sich ebenfalls Diagnosemöglichkeiten über den Zustand des Kühlsystems und des vergangenen, derzeitigen und - unter Zugrundelegung von Lastmodellen - auch des zukünftigen Betriebszustandes des Transformators. Durch die Aufbereitung dieser Zustandsgrößen des Kühlsystems in einer Datenbank lässt sich eine Historie der Betriebszustände aufbauen. Darüber hinaus können Wartungsintervalle anhand des tatsächlichen Betriebszustandes optimal berechnet und veranlasst werden. Der Unterschied zu bereits am Markt befindlichen Monitoring-Systemen liegt vor allem darin, dass die Optimierung des Kühlsystems auf jeden spezifischen Transformator fokussiert ist. Wesentliche Grundlage der Steuerungssoftware ist die Software SIMATIC.

Vorteilhafterweise wird für die Berechnung der Temperaturverteilung die Umgebungstemperatur und der durch die elektrische Komponente fließende Strom gemessen und fließt in die Berechnung der Temperaturverteilung ein, wobei bei Überschreitung vorgegebener Schwellwerte auf der Grundlage des gewählten Steuerungsprofils das Kühlelement mit einer entsprechend höheren Kühlleistung geregelt wird.

Erfindungsgemäß wird das Kühlelement mittels des gewählten Steuerungsprofils so geregelt, dass eine gleich bleibende Temperaturverteilung innerhalb der elektrischen Komponente gewährleistet ist. Alternativ wird das Kühlelement mittels des gewählten Steuerungsprofils so geregelt, dass eine vorgegebene maximale Temperaturverteilung innerhalb der elektrischen Komponente nicht überschritten wird.

In einer vorteilhaften Ausgestaltung des erfindungsgemäßen Verfahrens sind mindestens zwei Kühlelemente einzeln und drehzahlabhängig regelbar. Weiterhin ist die elektrische Komponente ein Transformator, sowie das Kühlelement ein drehzahlwählbarer Lüfter.

Die Erfindung zeichnet sich ebenfalls dadurch aus, dass die am Sensor gemessene Temperatur und gegebenenfalls der Viskosität, die berechnete Temperaturverteilung und die Regelungswerte für das Kühlelement an eine Leitwarte übertragen werden, wobei die Leitwarte unabhängig von der berechneten Temperaturverteilung und der daraus abgeleiteten Regelungswerte für das Kühlelement das Kühlelement eigenständig bei Bedarf regelt.

Vorteilhafterweise ist vorgesehen, dass das Steuerungsprofil jederzeit geändert werden kann und auf der Grundlage des geänderten Steuerungsprofils ein neuer optimaler Betriebszustand der elektrischen Komponente berechnet wird. So kann z.B. ein Bediener direkt an der elektrischen Komponente das Steuerungsprofil und damit den gewünschten Betriebszustand der elektrischen Komponenten verändern. Mit der Änderung des Steuerungsprofils ermittelt das erfindungsgemäße Verfahren die optimale Kühlleistung zur Erreichung der SOLL-Temperatur auf der Grundlage der IST-Temperatur.

Ebenfalls wird die Aufgabe durch die Merkmale des Anspruchs 9 gelöst. Erfindungsgemäß ist vorgesehen, dass eine Auswerteeinrichtung zur Berechnung der Temperaturverteilung innerhalb der elektrischen Komponente aufweist, wobei die Auswerteeinheit mit einem Sensor zur Temperatur- und gegebenenfalls der Viskositätsmessung eines im Kühlsystem befindlichen Kühlmediums verbindbar ist und die Auswerteeinheit auf der Grundlage der berechneten Temperaturverteilung das Kühlelement regelt.

Weitere vorteilhafte Ausgestaltungen der oben genannten Erfindung sind in den Unteransprüchen offenbart. Die vorliegende Erfindung wird anhand der nachfolgenden Figuren näher erläutert. Es zeigen:
- Fig. 1: Auflaufdiagramm des erfindungsgemäßen Verfahrens;
- Fig. 2: Ersatzschaubild der erfindungsgemäßen Vorrichtung.

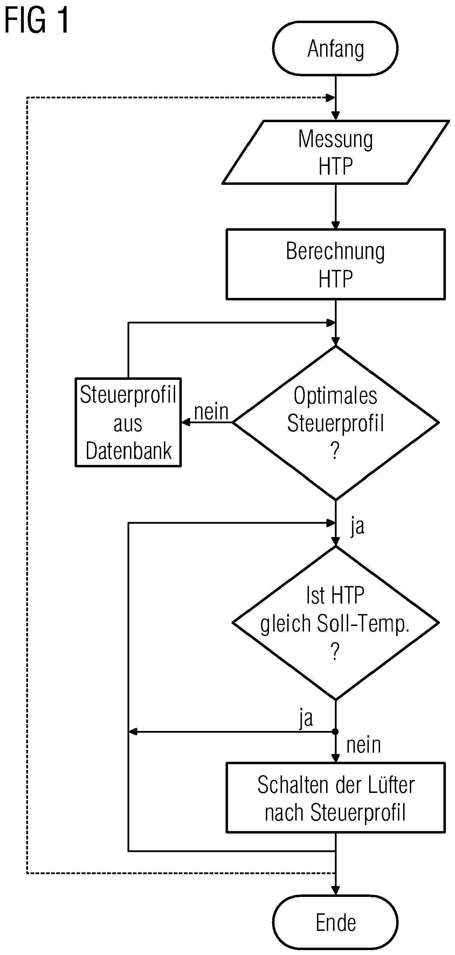

Die Figur Fig. 1 zeigt ein Flussdiagramm des erfindungsgemäßen Verfahrens. Aufgrund der an dem Temperatursensor gemessenen Temperatur wird mittels der im internationalen Standard IEC-Standard IEC 60354 definierten Temperaturgröße, die aktuelle Heißtemperatur (HPT) ermittelt. Weiterhin wird die Umgebungstemperatur mittels eines Temperatursensors 4, der Zustand des Öles (Sensor für Gasanteil im Öl 5.1; Öl-FeuchteSensor 5.2) und der Ölstand innerhalb des Kessels durch einen Schwimmer 6 gemessen. so ermittelte Heißpunkttemperatur (HPT) dient für das derzeit auf den spezifischen Transformator 2 angewendete Steuerungsprofil zur Bestimmung der IST-Temperatur der technischen Anlage 1. Hierzu wird das für den derzeitigen Betriebszustand, die derzeitige Lebensdauer des Transformators 2 und die vom Benutzer vorgegebenen optimalen Betriebszustände das optimale Steuerungsprofil ausgewählt. Sollte das optimale Steuerungsprofil derzeit nicht Grundlage für die notwendige Prozessteuerung sein, wird dieses aus einer Datenbank ausgelesen. Auf der Grundlage des optimalen Steuerungsprofils wird die aktuelle Heißpunkttemperatur (HPT) mit der optimalen, aufgrund des Steuerungsprofils berechneten Temperatur verglichen. Für den Fall, dass die Heißpunkttemperatur (HPT) der SOLL-Temperatur aufgrund des Steuerungsprofils entspricht, überwacht das System mittels einer Steuerung 7 die Heißtemperaturentwicklung und schaltet keine Lüfter 8.1, 8.2, 8.3 und/oder Pumpen 9.1, 9.2, 9.3, 9.4 des Kühlkreislaufes im Kühlsystem 10 zu. Sollte eine Abweichung der Heißpunkttemperatur (HPT) zur SOLL-Temperatur vorliegen, dient die Auswertung der Differenz der SOLL-Temperatur zur aktuellen Heißpunkttemperatur (HPT) zur Ansteuerung der angeschlossenen Lüfter 8.1, 8.2, 8.3 und/oder Pumpen 9.1, 9.2, 9.3, 9.4 des Kühlkreislaufes. Die oben erwähnte Differenz der Temperaturen wird als Grundlage dafür genommen, dass für eine Kühlleistung vom Kühlsystem 10 zusätzlich erzeugt werden muss, um die Heißpunkttemperatur (HPT) der SOLL-Temperatur anzupassen. Aufgrund des Steuerungsprofils und der Anzahl und Leistungsfähigkeit der Lüfter 8.1, 8.2, 8.3 und/oder Pumpen 9.1, 9.2, 9.3, 9.4, steuert die Steuerung 7 den oder die Lüfter 8.1, 8.2, 8.3 und/oder Pumpen 9.1, 9.2, 9.3, 9.4 mit einer entsprechenden Drehzahl bzw. mit einer entsprechenden Leistung. Der forcierte Einsatz von Pumpen im Kühlsystem 10 führt zu einer verstärkten Umwälzung des Kühlmediums im Kühlsystem 10 und damit zu einem Wärmeabtransport an die Umgebung. Diese Form der Kühlung ist sehr geräuscharm. Der Einsatz von Lüftern 8.1, 8.2, 8.3 führt zu einem verbesserten Wärmeaustausch des Kühlmediums über die Wärmetauscheinheit mit der Umgebungsluft und ist im Gegensatz zu Kühlkreispumpen 9.1, 9.2, 9.3, 9.4 geräuschintensiver.

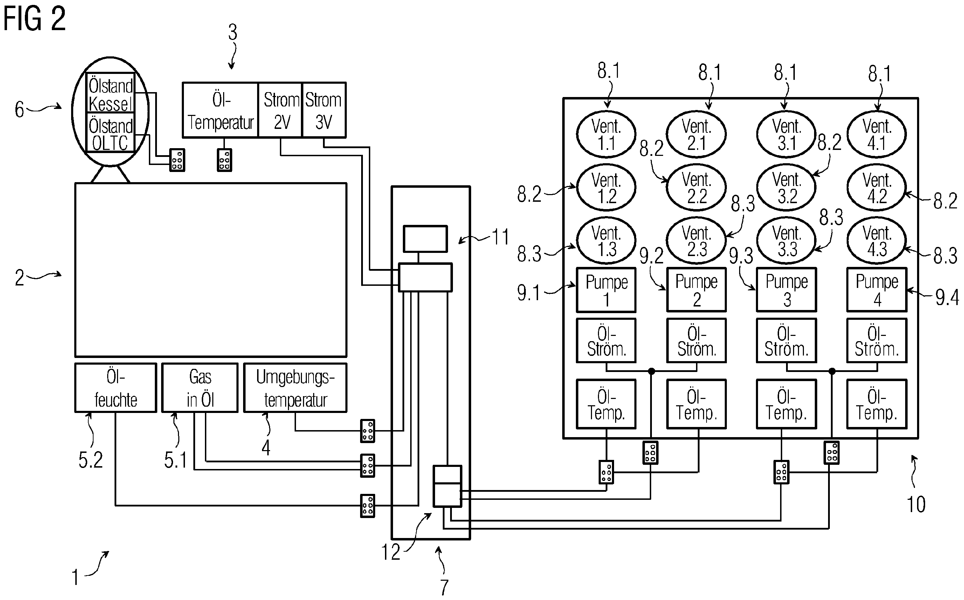

Die Figur Fig. 2 zeigt eine Schaltungsanordnung der erfindungsgemäßen Vorrichtung. Am Transformator 2 befinden sich verschiedenste Sensoren 3, 4, 5.1, 5.2, 6 die Aufschluss über die Heißpunkttemperatur (HPT), die Umgebungstemperatur, die im Transformator gelösten Gase, die Ölfeuchte sowie den Ölstand geben. Diese Sensoren 3, 4, 5.1, 5.2, 6 übermitteln die von ihnen gemessenen Daten an eine Zentraleinheit der Steuerung 7. Diese Zentraleinheit berechnet aufgrund dieser vorliegenden Messdaten einen aktuellen Zustand des Transformators 2. Dieser so ermittelte aktuelle Zustand des Transformators 2 wird mit einem für den derzeitigen Transformatorzustand optimalen Steuerungsprofil verglichen. Sollten die gemessenen Messwerte von den optimalen Werten gemäß dem Steuerungsprofil abweichen, werden die Lüfter 8.1, 8.2, 8.3 und/oder Pumpen 9.1, 9.2, 9.3, 9.4 bezüglich ihrer Anzahl und Leistung optimal auf die benötigte Kühlleistung zur Angleichung der IST-Temperatur an die SOLL-Temperatur abgestimmt sind.

## Patentansprüche

1. Verfahren zu Steuerung der Kühlung einer technischen Anlage (1) mit mindestens einem Transformator (2) und mit einem mit dem Transformator (2) verbundenen Kühlsystem (10) mit mindestens zwei Kühlelementen (8.1,8.2,8.3,9.1,9.2,9.3,9.4) zur Kühlung des Transformators (2), wobei mindestens ein Sensor (3) die Temperatur des Transformators (2) eines im Kühlkreislauf des Kühlsystems (10) befindlichen Kühlmediums misst, und auf der Grundlage der am Sensor (3) gemessenen Temperatur eine Temperaturverteilung innerhalb des Transformators (2) berechnet und in Abhängigkeit von der Temperaturverteilung die Kühlelemente (8.1,8.2,8.3,9.1,9.2,9.3,9.4) gesteuert werden,
**dadurch gekennzeichnet, dass**
regelbasierte Anwendungen und/oder ein neuronales Netz mittels eines wählbaren Steuerungsprofils zur Steuerung der drehzahlsteuerbaren Kühlelemente (8.1,8.2,8.3,9.1,9.2,9.3,9.4) dienen und bezüglich eines vorgegebenen, durch das Steuerungsprofil einzuhaltenden Betriebszustandes des Transformators (2) optimiert sind, wobei die Drehzahl der drehzahlsteuerbaren Kühlelemente (8.1,8.2,8.3,9.1,9.2,9.3,9.4) einzeln und drehzahlabhängig regelbar sind und durch das Steuerungsprofil so gesteuert werden, wobei das Steuerungsprofil jederzeit geändert werden kann und auf der Grundlage des geänderten Steuerungsprofils und der vorhandenen drehzahlsteuerbaren Kühlelemente (8.1,8.2,8.3,9.1,9.2,9.3,9.4) ein neuer optimaler Betriebszustand des Transformators (2) berechnet wird.

2. Verfahren nach Anspruch 1,
**dadurch gekennzeichnet, dass**
die Berechnung der Temperaturverteilung innerhalb des Transformators (2) auf der Grundlage der gemessenen Temperatur erfolgt.

3. Verfahren nach einem der Ansprüche 1 oder 2,
**dadurch gekennzeichnet, dass**
für die Berechnung der Temperaturverteilung die Umgebungstemperatur und der durch den Transformator (2) fließende Strom gemessen wird und in die Berechnung der Temperaturverteilung einfließt, wobei bei Überschreitung vorgegebener Schwellwerte auf der Grundlage des gewählten Steuerungsprofils die drehzahlsteuerbaren Kühlelemente (8.1,8.2,8.3,9.1,9.2,9.3,9.4) mit einer entsprechend höheren Kühlleistung gesteuert werden.

4. Verfahren nach einem der Ansprüche 1 bis 3,
**dadurch gekennzeichnet, dass**
die drehzahlsteuerbaren Kühlelemente (8.1,8.2,8.3,9.1,9.2,9.3,9.4) mittels des gewählten Steuerungsprofils so gesteuert werden, dass eine gleich bleibende Temperaturverteilung innerhalb des Transformators (2) gewährleistet ist.

5. Verfahren nach einem der Ansprüche 1 bis 3,
**dadurch gekennzeichnet, dass**
die drehzahlsteuerbaren Kühlelemente (8.1,8.2,8.3,9.1,9.2,9.3,9.4) mittels des gewählten Steuerungsprofils so gesteuert werden, dass eine vorgegebene maximale Temperaturverteilung innerhalb des Transformators (2) nicht überschritten wird.

6. Verfahren nach einem der vorhergehenden Ansprüche 1 bis 5,
**dadurch gekennzeichnet, dass** zumindest eines der drehzahlsteuerbaren Kühlelemente (8.1,8.2,8.3) ein drehzahlsteuerbarer Lüfter ist.

7. Verfahren nach einem der vorhergehenden Ansprüche 1 bis 6,
**dadurch gekennzeichnet, dass**
zumindest eines der drehzahlsteuerbaren Kühlelemente (9.1,9.2,9.3,9.4) eine drehzahlsteuerbare Pumpe innerhalb des Kühlkreislaufes des Kühlsystems (10) ist.

8. Verfahren nach einem der vorhergehenden Ansprüche 1 bis 7,
**dadurch gekennzeichnet, dass**
die am Sensor (3) gemessene Temperatur, die berechnete Temperaturverteilung und die Regelungswerte für die drehzahlsteuerbaren Kühlelemente (8.1,8.2,8.3,9.1,9.2,9.3,9.4) an eine Leitwarte übertragen werden, wobei die Leitwarte unabhängig von der berechneten Temperaturverteilung und der daraus abgeleiteten Regelungswerte für die drehzahlsteuerbaren Kühlelemente (8.1,8.2,8.3,9.1,9.2,9.3,9.4) jedes einzelne drehzahlsteuerbare Kühlelement (8.1,8.2,8.3,9.1,9.2,9.3,9.4) eigenständig bei Bedarf steuert.

9. Vorrichtung zur Durchführung des Verfahrens nach einem der Ansprüche 1 bis 8,
**dadurch gekennzeichnet, dass**
eine Auswerteeinrichtung (11) innerhalb der Steuerung 7 integriert ist und die Auswerteeinheit (11) zur Berechnung der Temperaturverteilung innerhalb des Transformators (2) dient, wobei die Auswerteeinheit (11) mindestens mit einem Sensor (3) zur Temperaturmessung eines im Kühlkreislauf eines Kühlsystems (10) befindlichen Kühlmediums verbindbar ist und die Auswerteeinheit (11) mittels einer Steuereinheit (12) innerhalb der Steuerung 7 auf der Grundlage der berechneten Temperaturverteilung die drehzahlsteuerbaren Kühlelemente (8.1,8.2,8.3,9.1,9.2,9.3,9.4) steuert.

## Claims

1. Method for controlling the cooling of an industrial installation (1) comprising at least one transformer (2) and a cooling system (10), connected to the transformer (2), comprising at least two cooling elements (8.1, 8.2, 8.3, 9.1, 9.2, 9.3, 9.4) for cooling the transformer (2), wherein at least one sensor (3) measures the temperature of the transformer (2) of a coolant in the cooling circuit of the cooling system (10), and, on the basis of the temperature measured at the sensor (3), a temperature distribution within the transformer (2) is calculated and the cooling elements (8.1, 8.2, 8.3, 9.1, 9.2, 9.3, 9.4) are controlled in dependence on the temperature distribution,
**characterized in that** rule-based applications and/or a neuron network is/are used for controlling the speed-controllable cooling elements (8.1, 8.2, 8.3, 9.1, 9.2, 9.3, 9.4) by means of a selectable control profile and is/are optimized with respect to a predetermined operating state of the transformer (2), which operating state is to be adhered to by the control profile, wherein the speed of the speed-controllable cooling elements (8.1, 8.2, 8.3, 9.1, 9.2, 9.3, 9.4) can be regulated individually and in a speed-dependent manner and is controlled in this manner by the control profile, wherein the control profile can be changed at any time and a new optimum operating state of the transformer (2) is calculated on the basis of the changed control profile and the existing speed-controllable cooling elements (8.1, 8.2, 8.3, 9.1, 9.2, 9.3, 9.4).

2. Method according to Claim 1, **characterized in that** the temperature distribution within the transformer (2) is calculated on the basis of the measured temperature.

3. Method according to one of Claims 1 or 2, **characterized in that**, for calculating the temperature distribution, the ambient temperature and the current flowing through the transformer (2) is measured and is included in the calculation of the temperature distribution, wherein, when predetermined threshold values are exceeded, the speed-controllable cooling elements (8.1, 8.2, 8.3, 9.1, 9.2, 9.3, 9.4) are controlled with a correspondingly higher cooling capacity on the basis of the selected control profile.

4. Method according to one of Claims 1 to 3, **characterized in that** the speed-controllable cooling elements (8.1, 8.2, 8.3, 9.1, 9.2, 9.3, 9.4) are controlled by means of the selected control profile in such a manner that a uniform temperature distribution within the transformer (2) is ensured.

5. Method according to one of Claims 1 to 3, **characterized in that** the speed-controllable cooling elements (8.1, 8.2, 8.3, 9.1, 9.2, 9.3, 9.4) are controlled by means of the selected control profile in such a manner that a predetermined maximum temperature distribution within the transformer (2) is not exceeded.

6. Method according to one of the preceding Claims 1 to 5, **characterized in that** at least one of the speed-controllable cooling elements (8.1, 8.2, 8.3) is a speed-controllable fan.

7. Method according to one of the preceding Claims 1 to 6, **characterized in that** at least one of the speed-controllable cooling elements (9.1, 9.2, 9.3, 9.4) is a speed-controllable pump within the cooling circuit of the cooling system (10).

8. Method according to one of the preceding Claims 1 to 7, **characterized in that** the temperature measured at the sensor (3), the calculated temperature distribution and the control values for the speed-controllable cooling elements (8.1, 8.2, 8.3, 9.1, 9.2, 9.3, 9.4) are transferred to a control room, wherein the control room independently controls each individual speed-controllable cooling element (8.1, 8.2, 8.3, 9.1, 9.2, 9.3, 9.4), if required, independently of the calculated temperature distribution and the control values for the speed-controllable cooling elements (8.1, 8.2, 8.3, 9.1, 9.2, 9.3, 9.4) derived therefrom.

9. Device for carrying out the method according to one of Claims 1 to 8, **characterized in that** an evaluating device (11) is integrated in the control system (7) and the evaluating unit (11) is used for calculating the temperature distribution within the transformer (2), wherein the evaluating unit (11) can be connected to at least one sensor (3) for measuring the temperature of a coolant located in the cooling circuit of a cooling system (10) and the evaluating unit (11) controls the speed-controllable cooling elements (8.1, 8.2, 8.3, 9.1, 9.2, 9.3, 9.4) on the basis of the calculated temperature distribution by means of a control unit (12) within the control system 7.

## Revendications

1. Procédé de commande du refroidissement d'une installation (1) technique, comprenant au moins un transformateur (2) et un système (10) de refroidissement, relié au transformateur (2) et ayant au moins deux éléments (8.1, 8.2, 8.3, 9.1, 9.2, 9.3, 9.4) de refroidissement pour refroidir le transformateur (2), dans lequel au moins une sonde (3) mesure la température du transformateur (2) d'un fluide de refroidissement se trouvant dans le circuit de refroidissement du système (10) de refroidissement et sur la base de la température mesurée par la sonde (3), calcule une répartition de température au sein du transformateur (2) et les éléments (8.1, 8.2, 8.3, 9.1, 9.2, 9.3, 9.4) de refroidissement sont commandés en fonction de la répartition de température,
**caractérisé en ce que**
des applications reposant sur une règle et/ou un réseau neuronal servent, au moyen d'un profil de commande pouvant être choisi, à commander les éléments (8.1, 8.2, 8.3, 9.1, 9.2, 9.3, 9.4) de refroidissement pouvant être commandés en vitesse de rotation et sont optimisés par rapport à un état de fonctionnement du transformateur (2) donné à l'avance et maintenant le profil de commande, les vitesses de rotation des éléments (8.1, 8.2, 8.3, 9.1, 9.2, 9.3, 9.4) de refroidissement, pouvant être commandées en vitesse de rotation, pouvant être réglées individuellement et en fonction de la vitesse de rotation et commandées par le profil de commande, de manière à pouvoir modifier à tout instant le profil de commande et à calculer, sur la base du profil de commande modifié et des éléments (8.1, 8.2, 8.3, 9.1, 9.2, 9.3, 9.4) de refroidissement présents pouvant être commandés en vitesse de rotation, un nouvel état de fonctionnement optimal du transformateur (2).

2. Procédé suivant la revendication 1,
**caractérisé en ce que**
le calcul de la répartition de température au sein du transformateur (2) s'effectue sur la base de la température mesurée.

3. Procédé suivant l'une des revendications 1 ou 2,
**caractérisé en ce que**,
pour le calcul de la répartition de température, on mesure la température ambiante et le courant électrique passant dans le transformateur (2) et on les incorpore dans le calcul de la réparation de température, dans lequel, si des valeurs de seuil données à l'avance sont dépassées, on commande, sur la base du profil de commande choisi, les éléments (8.1, 8.2, 8.3, 9.1, 9.2, 9.3, 9.4) de refroidissement pouvant être commandés en vitesse de rotation à une puissance de refroidissement plus grande correspondante.

4. Procédé suivant l'une des revendications 1 à 3,
**caractérisé en ce que**
l'on commande les éléments (8.1, 8.2, 8.3, 9.1, 9.2, 9.3, 9.4) de refroidissement pouvant être commandés en vitesse de rotation, au moyen du profil de commande choisi, de manière à assurer une répartition de température restant la même au sein du transformateur (2).

5. Procédé suivant l'une des revendications 1 à 3,
**caractérisé en ce que**
l'on commande les éléments (8.1, 8.2, 8.3, 9.1, 9.2, 9.3, 9.4) de refroidissement pouvant être commandés en vitesse de rotation, au moyen du profil de commande choisi, de manière à ne pas dépasser une répartition de température maximale donnée à l'avance au sein du transformateur (2).

6. Procédé suivant l'une des revendications précédentes 1 à 5,
**caractérisé en ce qu'**
au moins l'un des éléments (8.1, 8.2, 8.3) de refroidissement pouvant être commandés en vitesse de rotation est un ventilateur pouvant être commandé en vitesse de rotation.

7. Procédé suivant l'une des revendications précédentes 1 à 6,
**caractérisé en ce qu'**
au moins l'un des éléments (9.1, 9.2, 9.3, 9.4) de refroidissement pouvant être commandés en vitesse de rotation est une pompe pouvant être commandée en vitesse de rotation au sein du circuit de refroidissement du système (10) de refroidissement.

8. Procédé suivant l'une des revendications 1 à 7,
**caractérisé en ce que**
la température mesurée par la sonde (3), la réparation de température calculée et les valeurs de régulation des éléments (8.1, 8.2, 8.3, 9.1, 9.2, 9.3, 9.4) de refroidissement pouvant être commandés en vitesse de rotation sont transmises à un poste de contrôle, le poste de contrôle commandant, suivant les besoins indépendamment de la répartition de température calculée et des valeurs de régulation, qui s'en déduisent, des éléments (8.1, 8.2, 8.3, 9.1, 9.2, 9.3, 9.4) de refroidissement pouvant être commandés en vitesse de rotation de chaque élément (8.1, 8.2, 8.3, 9.1, 9.2, 9.3, 9.4) de refroidissement individuel pouvant être commandé en vitesse de rotation.

9. Installation pour effectuer le procédé suivant l'une des revendications 1 à 8,
**caractérisée en ce que**
un dispositif (11) d'exploitation est intégré à la commande 7 et l'unité (11) d'exploitation sert à calculer la répartition de température au sein du transformateur (2), l'unité (11) d'exploitation pouvant être reliée au moins à une sonde (3) de mesure de la température d'un fluide de refroidissement se trouvant dans le circuit de refroidissement d'un système (10) de refroidissement et l'unité (11) d'exploitation commandant, au moyen de l'unité (12) de commande, dans la commande 7, les éléments (8.1, 8.2, 8.3, 9.1, 9.2, 9.3, 9.4) de refroidissement pouvant être commandés en vitesse de rotation sur la base de la répartition de température calculée.
